# FASCICULE DE BREVET EUROPEEN

(11) **EP 2 346 632 B1**
(45) Date de publication et mention de la délivrance du brevet: **06.07.2016**
(21) Numéro de dépôt: 09768197.7
(22) Date de dépôt: 16.11.2009
(51) Int. Cl.: B22F 1/02, B23K 35/02, B23K 35/40

(54) **PRODUIT DE BRASAGE COMPRENANT UN MÉLANGE DE FLUX DE BRASAGE ET MÉTAL D'APPORT ET PROCÈDE DE FABRICATION**
EIN GEMISCH AUS HARTLÖTFLUSSMITTEL UND FÜLLERMATERIAL UMFASSENDES HARTLÖTPRODUKT UND HERSTELLUNGSVERFAHREN DAFÜR
BRAZING PRODUCT COMPRISING A MIXTURE OF BRAZING FLUX AND FILLER METAL, AND PRODUCTION METHOD THEREOF

(30) Priorité: 19.11.2008 FR 0857863
(43) Date de publication de la demande: 27.07.2011
(73) Titulaire: Selectarc Industries, 90600 Grandvillars (FR)
(72) Inventeur: SCHMITT, Philippe, F-25870 Geneuilles (FR); BOSI, Boris, F-13710 Fuveau (FR)
(74) Mandataire: Domange, Maxime
(86) Numéro de dépôt international: PCT/FR2009/052190
(87) Numéro de publication internationale: WO 2010/058116

(56) Documents cités:
- EP-A- 0 588 545
- WO-A-01/05552
- FR-A- 2 855 085

## Description

La présente invention concerne un nouveau produit de brasage et un nouveau procédé de fabrication du dit produit de brasage comprenant le mélange d'au moins un métal d'apport et de flux de brasage.

Le brasage est l'assemblage de deux matériaux à l'aide d'un métal en général sous forme d'alliage appelé métal d'apport ayant une température de fusion inférieure à celle des métaux à assembler et mouillant, par capillarité, les surfaces à assembler qui ne participent pas par leur fusion à la constitution du joint brasé. C'est un assemblage dit hétérogène.

Le chauffage de la zone à braser peut se faire par un fer à souder, de l'air chaud, une flamme (à l'aide d'un chalumeau), un arc électrique, un inducteur ou un laser. Le brassage peut se faire aussi au four à air, sous atmosphère contrôlée ou sous vide.

Très fréquemment, un matériau destiné à favoriser la pénétration de matière en fusion de métal d'apport appelé flux de brasage est utilisé en combinaison avec le métal d'apport. Le flux de brasage sous l'effet d'un chauffage (flamme, induction...) va d'abord décaper les pièces à assembler, puis permettre le mouillage du métal d'apport. Le mouillage est la capacité du métal à « couler » le long des pièces à assembler. Le flux fondu protège ensuite la brasure lors de son refroidissement.

Le flux de brasage est donc un mélange de produits chimiques permettant d'assurer un bon mouillage de l'alliage d'apport sur les pièces à assembler en :
- éliminant les oxydes présents à la surface des pièces à assembler, et
- protégeant les pièces à assembler de l'oxydation pendant toute la durée de l'opération de brasage, et en
- baissant la tension superficielle de l'alliage d'apport.

Il s'agit d'un agent réducteur conçu pour aider à enlever les impuretés et permettre le mouillage du métal d'apport par destruction de la couche d'oxyde à la surface des métaux à assembler.

Pour chaque type de métal d'apport, on sélectionne un type de flux de brasage et une quantité relative de flux de brasage appropriés, étant entendu que le flux de brasage doit être choisi entre autres de manière à présenter une température de fusion inférieure de quelques degrés à celle du métal d'apport. Ainsi lorsque que l'on chauffe l'ensemble des pièces à braser et du couple métal d'apport / flux de brasage, le flux de brasage fond en premier pour remplir sa fonction technique avant la fusion du métal d'apport.

A titre d'exemple, on peut utiliser les flux de brasage suivants :
- pour un métal d'apport constitué principalement de cuivre ou d'argent, un flux à base d'un mélange d'acide borique et de fluorure de potassium ;
- pour un métal d'apport constitué majoritairement d'aluminium, un flux à base de cryolithe potassique ; et
- pour un métal d'apport constitué majoritairement de zinc, un flux à base de cryolithe césique.

Le métal d'apport est en général mélangé avec ou formulé avec du flux de brasage.

Le flux de brasage et le métal d'apport sont souvent présentés à l'utilisateur sous forme de deux constituants distincts, d'une part en poudre ou pâte de flux, et d'autre part un fil creux ou une bande ou baguette de métal d'apport, comportant une âme en l'un des constituants qui est enrobée de l'autre constituant.

On connaît en particulier un produit de brasage dans lequel le métal d'apport se présente sous forme de bande ou feuillard replié sur lui-même et renfermant le flux brasage. Mais, l'étanchéité n'est pas bonne et lors de la mise en forme du feuillard, notamment sous forme d'anneaux ou baguettes, celui-ci peut s'ouvrir entraînant une perte de flux. D'autre part le ratio massique flux de brasage/métal n'est pas parfaitement homogène sur la section du fil fourré ou baguette obtenu.

On connaît également un produit de brasage sous forme de tube métallique du métal d'apport, obtenu par extrusion, rempli de poudre de flux de brasage. Ce type de produit de brasage est plus étanche et permet d'obtenir un ratio en pourcentage massique de flux de brasage/métal maîtrisé et homogène ce qui permet de déposer juste la quantité nécessaire de flux de brasage et de métal. Enfin, cette présentation sous forme de tube rempli de flux permet de présenter le fil sous différentes formes, notamment sous forme d'anneaux pour faciliter le brasage de pièces à section circulaire. Ces fils présentent en général un diamètre externe de 0.8 à 5mm et un diamètre interne du trou central de 0,3 à 2mm. Ces fils peuvent être présentés en longueurs unitaires jusqu'à 2m ou enroulés en bobines de 10 à 15 kg ou sous forme d'anneaux aux dimensions (diamètre fil et diamètre anneaux) permettant de déposer la quantité de métal souhaitée.

La quantité relative de flux de brasage dépend entre autre de la nature des matériaux à assembler et de leur capacité à s'oxyder. Pour un alliage d'apport type aluminium (Al), la proportion massique de flux est de l'ordre de 10 à 20%. Pour un alliage d'apport type zinc, cuivre-zinc-argent, la proportion massique de flux est de l'ordre de 3 à 12%.La quantité relative de flux de brasage dépend aussi de la forme du produit de brasage à savoir feuillard, tube fourré ou baguette enrobée.

En pratique, dans un fil tubulaire fourré rempli de flux de brasage, la proportion massique de flux de brasage suffisante est en général de 5 à 20% du poids total du fil + flux.

Toutefois le procédé de fabrication de ces fils tubulaires fourrés est long et onéreux. En outre, il n'est pas possible de le mettre en oeuvre pour certains flux de brasage. En effet, le tube de métal d'apport doit être rempli de flux de brasage par un procédé connu de remplissage par vibration dans lequel la poudre de brasage initialement de granulométrie de 1 à 10 µm est granulée sous forme de grains de 50 à 100 µm pour éviter que la poudre de flux ne s'agrège en bloc et ne vienne boucher le tube empêchant son bon remplissage. Pour ce faire, il est nécessaire de fabriquer des tubes de plus grand diamètre externe et plus grand diamètre interne pour réussir à les remplir de flux par vibration, avant de tréfiler les tubes sous forme de fils creux de plus petit diamètre externe et plus petit diamètre interne.

D'autre part, pour certains flux, comme les flux à base de cryolithe potassique, les grains de flux se désagrègent lors de la vibration qu'ils subissent lors du remplissage du tube.

En outre, les produits de brasage ci-dessus constitués de fil ou baguette de métal d'apport rempli de flux de brasage présentent une certaine hétérogénéité due à la juxtaposition de 2 constituants pouvant aboutir à des défauts de brasage. Un manque de flux engendre une mauvaise coulabilité du métal et des trous dans la brasure. Un excès de flux requiert un nettoyage plus important de la brasure.

Pour remédier à l'hétérogénéité ci-dessus, il existe des pâtes abrasées formées d'un mélange tout préparé de poudre de métal d'apport et de flux en proportions voulues dont les grains sont liés entre eux au moyen d'un liant. Toutefois, la présence du liant dans la pâte abrasée nécessite un apport thermique accru, c'est-à-dire qu'il est nécessaire de dépenser plus d'énergie et passer plus de temps. En outre, la pâte nécessite un outil d'application telle qu'une seringue ou une pipette.

Pour remédier à ces inconvénients et lacunes, dans FR 2 855 085 , la demanderesse a décrit un nouveau type de produit de brasage constitué à partir d'un bloc de matériau de brasage obtenu en mélangeant directement de la poudre de flux de brasage de granulométrie de 1 à 10 µm et de la poudre de métal d'apport de granulométrie de 50 à 350 µm, le mélange étant ensuite compacté à une pression de 1000 à 1500 bars à une température supérieure à 300°C, mais inférieure à la température de fusion du flux de brasage. On obtient un bloc relativement homogène qui peut être ensuite transformé mécaniquement pour être mis en forme, par toute technique connue, de fil, bande, ou baguette entre autres.

Ce procédé de FR 2 855 085 n'est cependant pas totalement satisfaisant, car on observe qu'à défaut de mettre en oeuvre une quantité importante de flux, notamment une proportion de flux supérieure à 25% en poids par rapport au poids total du mélange, le métal d'apport n'est pas suffisamment protégé de l'oxydation par le flux de brasage. Cette oxydation se présente sous forme d'une couche superficielle d'oxyde (notamment d'alumine pour les alliages à base d'aluminium) ce qui nécessite une augmentation en proportion du flux de brasage. Mais, de telle proportion massique de flux supérieure à 25%, diminue la résistance mécanique du matériau de mélange, lequel devient alors incompatible avec une transformation mécanique du produit de brasage sous forme de fil de petit diamètre et grande longueur que ce soit en longueur unitaire ou en bobine.

Dans WO 01/05552, on décrit un produit de brasage constitué de poudre de métal d'apport et de flux de brasage directement compactés et moulés à sec sous forme d'anneaux. La taille des particules de métal n'est pas indiquée.

Dans EP-588 545, on décrit également des produits de brasage obtenus par compactage de poudre de métal d'apport et de flux de brasage. Et il est précisé qu'afin d'obtenir un mélange uniforme et une structure interne suffisamment dense, la taille des particules ne doit pas excéder 44 µm pour les particules de métal et 30µm pour les grains du flux de brasage. Dans EP-588 545, on décrit uniquement un produit de brasage sous forme de bandes plates obtenu par moulage.

Les produits de brasage obtenus par les procédés décrits dans les documents EP-588 545 et WO 01/05552 ne permettent pas d'obtenir des produits de brasage qui présentent à la fois des propriétés de résistance mécanique suffisantes pour pouvoir être transformés en fils de petit diamètre et de grande longueur par pressage d'une part, et d'autre part des propriétés de résistance à l'oxydation.

Le but de la présente invention est de fournir un nouveau type de produit de brasage constitué d'un mélange de métal d'apport et flux de brasage, mais qui soit d'une part suffisamment résistant mécaniquement pour pouvoir être transformé en fil de petit diamètre et grande longueur et d'autre part dont le métal d'apport ne s'oxyde pas.

Pour ce faire, la présente invention fournit un procédé de fabrication d'un produit de brasage à partir d'une poudre de flux de brasage et d'un métal d'apport caractérisé en ce que l'on réalise les étapes suivantes dans lesquelles :
a) on prépare des particules de métal d'apport, de préférence d'un alliage d'apport, de taille de 500 µm à 5 mm, de préférence de 2 à 4 mm, et
b) on mélange de ladite poudre de flux de brasage de granulométrie inférieure à 100 µm, avec de l'eau jusqu'à obtenir une pâte de faible viscosité apte à s'écouler plastiquement, de préférence une pâte liquide, et
c) on verse, de préférence progressivement et à faible débit, de préférence encore en goute à goutte, ladite pâte de flux de brasage sur les dites particules de métal, tout en malaxant et chauffant les dites particules de métal à une température d'au moins 100°C, de préférence de 120 à 150°C, jusqu'à obtenir un enrobage régulier de la surface de chacune desdites particules de métal d'apport avec ladite pâte, et on chauffe les dites particules enrobées à la dite température jusqu'à évaporer l'eau contenue dans ledit flux de brasage enrobant les dites particules, et
d) on obtient le dit produit de brasage en compactant mécaniquement les particules enrobées de l'étape c) à une pression d'au moins 5000 bars, de préférence à 7000 bars, en les chauffant à une température d'au moins 300°C inférieure à la température de fusion du flux de brasage.

Le produit de brasage est donc constitué exclusivement de métal et de flux.

Le procédé de préparation des particules de métal enrobées de flux de brasage selon les étapes a) à c) correspond au procédé de fabrication de dragées d'amande de confiserie. Il permet d'obtenir un enrobage homogène en composition et épaisseur d'une couche rigide de flux sur toute la surface des dites particules.

A l'étape c), le chauffage des particules enrobées permet d'évaporer l'eau contenue dans la dite pâte de flux de brasage enrobant les dites particules

La pression mise en oeuvre à l'étape d) permet l'évacuation de l'air contenu dans le mélange et élimination des porosités dans le produit de brasage obtenu.

Une telle opération de compression peut être appelée « procédé de compaction isostatique à chaud » (CIC) par l'action simultanée de la pression et de la température.

La température mise en oeuvre à l'étape d) permet aussi de réaliser une évaporation de l'eau résiduelle ou l'eau de l'atmosphère qui s'est adsorbée sur ou absorbée dans le flux après l'étape c), mais la température mise en oeuvre inférieure à la température de fusion du flux permet d'éviter la détérioration des caractéristiques du flux de brasage et éviter toute ségrégation par rapport au métal d'apport.

On obtient un bloc dans lequel on observe en le sectionnant dans la masse que les espaces entre les particules de métal sont entièrement remplis dudit flux, celui-ci entourant sur tout leur pourtour les particules de métal. On constate que le métal d'apport ne s'oxyde pas au cours de sa fabrication et ultérieurement dans le produit fini car le produit brase correctement sans apport de flux de complémentaire.

En revanche, dans un produit obtenu selon le procédé de FR 2 8550585, le métal d'apport, de par sa faible granulométrie, présente une surface exposée à l'oxydation très importante par rapport au poids total et nécessite une plus grosse quantité de flux de brasage supérieur à 30% en poids total.

A l'issue de l'étape d), on peut mettre en forme mécaniquement le bloc de matériau compacté obtenu sous forme de fil, de baguette, de barre, de bande ou feuilles ou anneaux par des opérations de transformations mécanique choisies parmi l'étirage, le filage, le tréfilage, le bobinage, le dressage, le formage d'anneaux, le laminage, le calandrage, l'extrusion à chaud et la découpe.

En particulier, le matériau compacté obtenu présente une résistance mécanique suffisante pour être transformé mécaniquement en fil, notamment dans une presse à filer. Le filage est une méthode de mise en forme des métaux par forgeage consistant à pousser un matériau dans un conteneur. Le matériau est rendu ductile par chauffage à une température dite température de filage, et on le pousse à travers un trou ou filière à l'extrémité d'un conteneur. La poussée permettant la déformation est fournie par une presse ou piston actionné par des vérins de préférence hydraulique à l'intérieur du conteneur. A partir d'une certaine pression, il y a écoulement plastique à travers la filière. On peut obtenir un fil à section circulaire ou des profilés de section de formes différentes correspondant à celle de la filière.

A l'étape a), on entend par taille de particule de 500 µm à 5 mm, la plus grande dimension des dites particules.

De préférence, les dites particules de départ ont une forme sensiblement homogène, c'est-à-dire avec au moins sensiblement la même longueur dans deux directions sensiblement perpendiculaires.

On peut préparer les dites particules de métal d'apport en les découpant dans une masse de dit métal, de plus grand volume.

Plus particulièrement, la granulométrie du flux de brasage est de 10 à 40 µm.

Selon d'autres caractéristiques particulières de l'invention :
- à l'étape a), on prépare les dites particules de métal d'apport en les découpant dans un fil plein de dit métal d'apport de diamètre correspondant à la dite taille de 500 µm à 5 mm, par longueur unitaire de préférence sensiblement égale au diamètre du fil ;
- à l'étape b), la proportion massique d'eau est de préférence de 30 à 50% de préférence 40% pour 50 à70% de poudre de flux, de préférence 60%,
- l'étape d) la température de chauffe est comprise entre 300°C et 500°C.

De préférence, à l'étape c), on verse la dite pâte de flux dans un mélangeur constitué d'une cuve rotative en rotation contenant les dites particules, la dite cuve étant chauffée à la dite température.

A l'étape c), on verse la dite pâte de flux de brasage en quantité telle que l'on obtienne un mélange avec la proportion pondérale de flux de brasage recherchée par rapport au poids total de flux et de métal dans le produit de brasage. Plus particulièrement, la proportion massique de flux est de 3 à 20% par rapport au poids de dites particules de métal enrobées.

Plus particulièrement encore, le métal d'apport est un alliage comprenant comme métal de base un métal choisi parmi l'argent, l'aluminium, le zinc et le cuivre, le métal secondaire de l'alliage étant choisi parmi Si, Zn, Cu, Mn, Fe, Cr, Zr, Sn, TI, Be, Cd, Ag, Al, et Sb.

Selon un exemple de réalisation, l'alliage d'apport est un mélange de 88% en poids d'Aluminium et 12% en poids de Silicium, le flux de brasage est un cryolithe potassique comprenant 27 à 30% de Potassium, 1.5 à 2% de Cesium, 16 à 18% d'aluminium et 49 à 53% de Fluor et la proportion massique de flux de brasage est de 8 à 12%.

Cet alliage et ce flux de brasage présentent des températures de fusion de 580°C et respectivement 566 °C.

Selon un autre exemple de réalisation, que l'alliage comprend 75 à 98% de Zn et respectivement 2 à 25% de Al, le flux est une cryolithe de césium comprenant 50 à 65% de Césium, 5 à 15 % d'Aluminium et 25 à 40% de Fluor et la proportion massique de flux est de 5 à 15%.

Cet alliage et ce flux présentent des températures de fusion de 420 à 460°C et respectivement 440 à 450 °C.

Selon un autre exemple de réalisation, l'alliage comprend 30 à 56 % d'Ag et 3 métaux secondaires comprenant Cu, Zn et Cd ou Cu, Zn et Sn, et le flux est un mélange d'acide borique et de fluorure de potassium et la proportion massique de flux est de 3 à 10%. Ces alliages et ce flux présentent des températures de fusion de 620 à 760°C pour les alliages et respectivement 450 °C pour le flux.

Dans un mode préféré de réalisation, à l'étape d), on fabrique un produit de brasage constitué d'un fil plein de préférence de 1 à 3 mm de diamètre, en réalisant les étapes suivantes :
d-1) on place les particules enrobées de l'étape c) dans un conteneur cylindrique (2) de presse à filer que l'on porte à une dite température correspondant à la température de filage et on réalise une première compression à l'intérieur dudit conteneur à une pression d'au moins 5000 bars avec le piston (3) de la presse à filer (4) pour obtenir une billette (5) compacte de diamètre de préférence d'au moins 50mm, et
d-2) on réalise une deuxième compression à l'aide du dit piston à une pression apte à permettre le filage de la billette à travers une filière de diamètre plus petit que celui de la billette, de préférence de 1 à 3 mm de diamètre, à une deuxième pression d'au moins 10.000 bars, de préférence encore au moins 15.000 bars.

A l'étape d-1), la première compression à une pression d'au moins 5000 bars correspond à une pression inférieur à la pression de filage .La décompression consécutive à cette première compression par retrait du piston permet l'évacuation de l'air et de l'eau restée sous forme d'humidité dans le matériau.

A l'étape d-2) la forte poussée combinée au rapport de sections entre la billette et le fil , ce dernier correspondant à celui de la filière, conduit à un allongement des particules tel que lorsqu'on observe une section transversale du fil obtenu on n'observe un mélange apparemment homogène sans pouvoir distinguer, en l'absence de microscope, des contours de particules.

De façon connue, le fil obtenu peut être dressé sous forme de baguette jusqu'à 2m ou bobiné ou mis sous forme d'anneaux de 2 à 100mm de diamètre intérieur d'anneau.

Ce procédé de fabrication d'un fil de brasage selon l'invention est particulièrement avantageux en termes de coût par rapport au procédé de fabrication de fils fourrés de la technique antérieure, dans la mesure où on obtient directement un fil de diamètre voulu sans avoir à recourir à l'étape intermédiaire de fabrication d'un tube de plus grand diamètre comme décrit précédemment en ce qui concerne la technique antérieure. Le procédé d'obtention d'un fil de brasage plein selon la présente invention est donc beaucoup moins onéreux que le procédé d'obtention d'un fil de la technique antérieure.

La présente invention fournit également un produit de brasage pouvant être obtenu par le procédé tel que défini ci-dessus, caractérisé en ce qu'il comprend un matériau solide et rigide compacté exclusivement constitué de dit flux de brasage et de dit métal d'apport, se présentant sous forme de bloc, en particulier sous forme de billette, sa structure telle qu'observée en section transversale ou longitudinale dudit produit, étant constituée de dites particules de métal d'apport enrobées de dit flux, lesdites particules de métal d'apport présentant une taille de 500µ à 5 mm, de préférence de 2 à 4 mm, lesdites particules enrobées étant compactées de sorte que ledit flux de brasage remplit entièrement les espaces entre lesdites particules de métal, ledit matériaux solide présentant une résistance mécanique le rendant apte au filage sous presse, notamment pour obtenir un fil de 1 à 3 mm de section, avec une proportion massique de dit flux de brasage de 3 à 20%, de préférence inférieure à 15%.

Ce produit de brasage sous forme de bloc est obtenu par le procédé tel que défini ci-dessus avant transformation sous forme de fil, notamment un procédé obtenu à l'issue de l'étape d-1) ci-dessus.

Le produit de brasage obtenu est particulièrement avantageux en ce qu'il permet une homogénéité du ratio flux/ métal parfaitement maîtrisée et le dit matériau ne s'oxyde pas. En outre un tel produit peut-être obtenu avec n'importe quel flux. Enfin, son coût de fabrication est relativement faible et il peut être transformé sous des formes quelconques notamment profilés ou fils.

La présente invention fournit également un produit de brasage, sous forme de fil pouvant être obtenu par le procédé défini ci-dessus à l'étape d-2), caractérisé en ce qu'il se présente sous forme de fil, de préférence de 1 à 3mm de diamètre et présente une structure telle, qu'en section longitudinale dudit fil on observe un mélange dudit métal d'apport avec ledit flux de brasage, exclusivement constitué de dit métal d'apport avec ledit flux de brasage, avec des traces longitudinales de flux de brasage noyées dans la masse du métal d'apport, avec une proportion massique de dit flux de brasage de 3 à 20% de préférence inférieure à 15%.

On entend ci-dessus par « exclusivement constitué » que le mélange consiste essentiellement dans les deux dits constituants pour réaliser l'effet technique de brasage.

Ce produit est particulièrement avantageux par rapport aux fils creux de métal d'apport fourrés de flux de brasage en ce que le flux sort sur toute la section du fil et non pas seulement par le centre comme pour les fils creux (donc le cas échéant par les extrémités de l'anneau) et l'homogénéité structurelle entre flux et métal est optimale.

Des essais comparatifs de brasage ont été réalisés avec les fils de brasage selon l'invention, et des fils fourrés de brasage selon la technique antérieure, qui confirment à l'examen microscopique la meilleure qualité du brasage en termes d'aspect et d'absence de dépôt apparent avec les fils selon l'invention. D'autre part, des tests de résistance mécanique, à savoir de tenue en traction et test d'étanchéité des brasages réalisés avec des fils selon l'invention satisfont les valeurs de référence obtenues par les fils fourrés de brasage de la technique antérieure.

D'autres caractéristiques et avantages de la présente invention apparaîtront à la lumière des exemples de la description détaillée qui va suivre, faite en référence aux figures dans lesquelles :

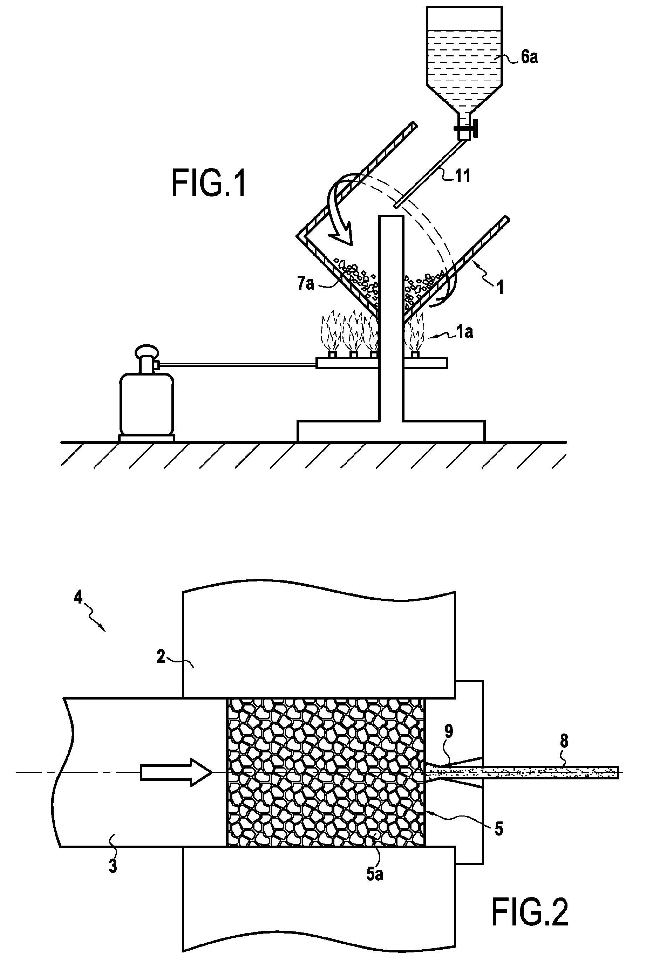

- la figure 1 représente une cuve rotative mise en oeuvre aux étapes a) à c) du procédé et,
- la figure 2 représente un dispositif de filage mis en oeuvre aux étapes d1) et d2) du procédé décrit ci-dessus,
- la figure 3 représente une coupe longitudinale d'un produit de brasage obtenu sous forme de billettes à l'étape d1) défini ci-dessus, et
- la figure 4 représente une coupe longitudinale d'un produit de brasage sous forme de fil de 1,6mm de diamètre obtenu à l'étape d2) décrite ci-dessus.

### Exemple 1:

### 1. Matériaux de base

- Fil de métal d'apport plein uniforme de diamètre 3mm de AlSi 12 , à savoir un alliage d'apport qui est un mélange de 88% en poids d'aluminium et 12% en poids de silicium. Cet alliage présente une température de fusion de 580°C.
- Flux de brasage en poudre Nocolock Cs^{®} de la société SOLVAY (Belgique) comprenant de la cryolithe potassique comprenant en poids 29% de Potassium, 1.8% de Cesium, 17% d'aluminium et 51% de Fluor. Ce flux de brasage présente une granulométrie de 10 à 20 µm et une température de fusion de 566 °C.
- Eau

### 2. Fabrication de particules enrobées

Le fil plein de métal d'apport est découpé en morceaux ou particules 7a de longueur égale au diamètre de 3 mm à l'aide d'une presse à découper (ou toute installation permettant cette coupe).

Le flux est mélangé à l'eau pour obtenir une pâte liquide 6a, dans un ratio pondéral est de 40% de flux, 60% d'eau.

Les grains ou particules de métal sont ensuite chauffés la dans une cuve rotative inclinée 1 à une température de 120-150°C env.

A température, la pâte de flux est versée 11 sensiblement au centre de la cuve rotative 1 progressivement au goutte à goutte sur les particules de métal malaxé et chauffé en rotation dans la dite cuve rotative afin de réaliser un enrobage régulier et homogène des particules de métal.

Lorsque toute l'eau s'est évaporée, les particules de métal sont enrobées d'une couche de flux de 0,4 à 0,9 mm d'épaisseur, représentant une proportion massique en flux de brasage entre 10 et 15% environ. Le mélange de particules enrobées est alors prêt pour la deuxième étape ci-après.

### 3. Fabrication de billette et de fil

La fabrication du fil est réalisée avec une presse à filer 4 comprenant un conteneur cylindrique 2 de diamètre 58mm. Le conteneur de la presse est maintenu en chauffe à une température d'environ 450°C. Les grains enrobés sont chargés dans le conteneur de la presse à filer.

Les grains enrobés 5a sont ensuite comprimés par actionnement du piston à une pression de 7 000 bars pour constituer une 'billette' compacte 5.

Une phase de décompression par retrait du piston 3 permet ensuite l''évacuation de l'air et l'eau restée sous forme d'humidité.

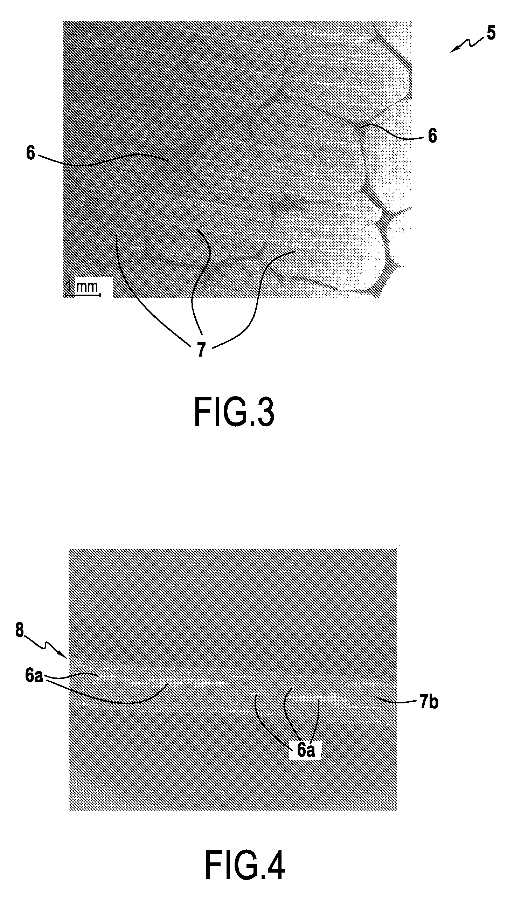

La billette 5 obtenue présente une structure en coupe longitudinale à ce stade comme représenté figure 3. On observe les contours des particules de métal d'apport enrobées 5a de flux, ledit flux 6 remplissant les espaces entre les particules de métal 7.

Cette billette est ensuite comprimée à nouveau à 15 000 bars toujours maintenue à 450°C pour être extrudée à travers une filière 9 sous forme de fil 8 de diamètre désiré (en général entre 2.4 mm et 1.6 mm).

Le fort coefficient de section (2mm vs 58 mm) conjugué aux pression et température indiquées ci-dessus permettent une plus grande homogénéisation de la structure entre métal d'apport et flux de brasage dans le produit final, comme représenté sur la figure 4. En coupe longitudinale du fil, on observe des traces longitudinales de flux de brasage 6a noyées dans la masse du métal 7b, c'est-à-dire le métal 7b entourant les traces longilignes de flux de brasage 6a, sans pouvoir distinguer des contours de particules de métal 7a.

Sur la figure 4, les stries obliques sur le fil résultent du polissage de la surface avant observation au microscope.

Le fil fabriqué 8 peut ensuite être bobiné, dressé sous forme de baguette ou mis sous forme d'anneaux directement en sortie de machine.

### Exemple 2

### 1. Matériaux de base

- Fil de métal d'apport plein uniforme de diamètre 3mm en moyenne d'un alliage comprenant 98% de Zn et 2 % de Al. Cet alliage présente une température de fusion de 440°C.
- le flux de brasage est une cryolithe de césium de la société Chemetall Gmbh (Allemagne) comprenant 58% de Césium, 10 % d'Aluminium et 32% de Fluor. Ce flux présente une granulométrie de 10 à 20µm et une température de fusion de 450 à 460°C.
- Eau

### 2. Fabrication de particules enrobées

On suit le même protocole qu'à l'exemple 1 avec et les mêmes proportions massiques d'eau de 60 % dans la pâte et 10% de flux dans les particules enrobées et le malaxage et enrobage se fait à la même température de 120°C.

### 3. Fabrication des billette et fil

On suit le même protocole qu'à l'exemple 1 avec une température de chauffe de la presse de 330°C et des pressions de compression de 7 000 bars pour obtenir une dite billette et une recompression de 25 000 bars pour obtenir un fil 8 à travers la filière 9.

## Revendications

1. Procédé de fabrication d'un produit de brasage à partir d'une poudre de flux de brasage et d'un métal d'apport **caractérisé en ce que** l'on réalise les étapes suivantes dans lesquelles :
a) on prépare des particules de métal d'apport (7a), de préférence d'un alliage d'apport, de taille de 500 µm à 5 mm, de préférence de 2 à 4 mm, et
b) on mélange de ladite poudre de flux de brasage de granulométrie inférieure à 100µm, de préférence de 10 à 40µm, avec de l'eau jusqu'à obtenir une pâte de faible viscosité apte à s'écouler plastiquement, de préférence une pâte liquide (6a), et
c) on verse, de préférence progressivement et à faible débit, de préférence encore en goute à goutte, ladite pâte de flux de brasage sur les dites particules de métal, tout en malaxant et chauffant les dites particules de métal à une température d'au moins 100° C. de préférence de 120 à 150° C, jusqu'à obtenir un enrobage régulier de la surface de chacune desdites particules de métal d'apport avec ladite pâte, et on chauffe les dites particules enrobées à la dite température jusqu'à évaporer l'eau contenue dans ledit flux de brasage enrobant les dites particules, et
d) on obtient le dit produit de brasage en compactant mécaniquement les particules enrobées de l'étape c) à une pression d'au moins 5000 bars, de préférence à 7000 bars, en les chauffant à une température d'au moins 300°C inférieure à la température de fusion du flux de brasage.

2. Procédé selon la revendication 1 **caractérisé en ce que** à l'étape a), on prépare les dites particules de métal d'apport en les découpant dans un fil plein de dit métal d'apport de diamètre correspondant à la dite taille de 500 µm à 5 mm, par longueur unitaire de préférence sensiblement égale au diamètre du fil.

3. Procédé selon l'une des revendication 1 et 2 **caractérisé en ce que** à l'étape b), la proportion massique d'eau est de préférence de 30 à 50% de préférence 40% pour 50 à 70% de poudre de flux, de préférence 60%.

4. Procédé selon l'une des revendications 1 à 3 **caractérisé en ce que** à l'étape c), on verse la dite pâte de flux dans un mélangeur constitué d'une cuve rotative (1) en rotation contenant les dites particules, la dite cuve étant chauffée (1a) à la dite température.

5. Procédé selon l'une des revendications 1 à 4 **caractérisé en ce qu'**à l'étape d) la température de chauffe est comprise entre 300°C et 500°C.

6. Procédé selon l'une des revendications 1 à 5 **caractérisé en ce que** la proportion massique de flux est de 3 à 20% par rapport au poids de dites particules de métal enrobées.

7. Procédé selon l'une des revendications 1 à 6 **caractérisé en ce que** le métal d'apport est un alliage comprenant comme métal de base un métal choisi parmi l'argent, l'aluminium, le zinc et le cuivre, le métal secondaire de l'alliage étant choisi parmi Si, Zn, Cu, Mn, Fe, Cr, Zr, Sn, TI, Be, Cd,, Ag, Al, et Sb .

8. Procédé selon l'une des revendications 1 à 7 **caractérisé en ce que** l'alliage d'apport est un mélange de 88% en poids d'Aluminium et 12% en poids de Silicium, le flux de brasage est un cryolithe potassique comprenant 27 à 30% de Potassium, 1.5 à 2% de Césium, 16 à 18% d'aluminium et 49 à 53% de Fluor et la proportion massique de flux de brasage est de 8 à 12%.

9. Procédé selon l'une des revendications 1 à 7 **caractérisé en ce que** l'alliage comprend 75 à 98% de Zn et respectivement 2 à 25% de Al, le flux est *une* cryolithe de césium comprenant 50 à 65% de Césium, 5 à 15 % d'Aluminium et 25 à 40% de Fluor et la proportion massique de flux est de 5 à 15%.

10. Procédé selon l'une des revendications 1 à 9 **caractérisé en ce qu'**à l'étape d), on fabrique un produit de brasage constitué d'un fil plein, de préférence de 1 à 3 mm de diamètre, en réalisant les étapes suivantes :
d-1) on place les particules enrobées de l'étape c) dans un conteneur cylindrique (2) de presse à filer (4) que l'on porte à une dite température correspondant à la température de filage et on réalise une première compression à l'intérieur dudit conteneur à une pression d'au moins 5000 bars avec un piston (3) de la presse à filer (4) pour obtenir une billette (5) compacte de diamètre de préférence d'au moins 50mm, et
d-2) on réalise une deuxième compression à l'aide du dit piston à une pression apte à permettre le filage de la billette (5) à travers une filière (9) de diamètre plus petit que celui de la billette, de préférence de 1 à 3 mm de diamètre, à une deuxième pression d'au moins 10.000 bars, de préférence encore au moins 15.000 bars.

11. Procédé selon la revendication 10 **caractérisé en ce que** à l'étape d1) lesdites particules enrobées de l'étape c) comprennent des particules de métal d'apport de 2 à 5 mm enrobées de dit flux de brasage.

12. Produit de brasage obtenu par le procédé selon l'une des revendications 1 à 9, **caractérisé en ce qu'**il comprend un matériau solide et rigide compacté, exclusivement constitué de dit flux de brasage et de dit métal d'apport, se présentant sous forme de bloc, en particulier sous forme de billette (5), sa structure telle qu'observée en section transversale ou longitudinale dudit produit, étant constituée de dites particules de métal d'apport enrobés (5a) de dit flux, lesdites particules de métal d'apport présentant une taille de 500µ à 5 mm, lesdites particules enrobées (5a) étant compactées de sorte que ledit flux de brasage (6) remplit entièrement les espaces entre lesdites particules de métal (7), ledit matériaux solide présentant une résistance mécanique le rendant apte au filage sous presse avec une proportion massique de dit flux de brasage de 3 à 20%, de préférence inférieure à 15%.

13. Produit de brasage obtenu par le procédé selon la revendication 11, **caractérisé en ce que** la taille desdites particules de métal d'apport est de 2 à 5 mm.

14. Produit de brasage obtenu par le procédé selon la revendication 11, **caractérisé en ce qu'**il se présente sous forme de fil, de préférence de 1 à 3mm de diamètre et présente une structure telle, qu'en section longitudinale dudit fil on observe un mélange dudit métal d'apport avec ledit flux de brasage, exclusivement constitué de dit métal d'apport avec ledit flux de brasage, avec des traces longitudinales de flux de brasage (6a) noyées dans la masse du métal d'apport (7b), avec une proportion massique de dit flux de brasage de 3 à 20% de préférence inférieure à 15%.

## Patentansprüche

1. Verfahren zur Herstellung eines Lötprodukts ausgehend von einem Lötflusspulver und einem Zusatzmetall, **dadurch gekennzeichnet, dass** man die folgenden Schritte ausführt, bei welchen:
a) man Zusatzmetallteilchen (7a), vorzugsweise einer Zusatzlegierung, mit Größe von 500 µm bis 5 mm, vorzugsweise von 2 bis 4 mm, vorbereitet, und
b) man das Lötflusspulver mit Granulometrie kleiner als 100 µm, vorzugsweise 10 bis 40 µm, mit Wasser vermischt, bis man eine Paste mit geringer Viskosität erhält, die geeignet ist, um plastisch zu fließen, vorzugsweise eine flüssige Paste (6a), und
c) man vorzugsweise allmählich und mit geringem Durchfluss, vorzugsweise tropfenweise, die Lötfilusspaste auf die Metallteilchen gießt, während man die Metallteilchen gleichzeitig durchknetet und auf eine Temperatur von mindestens 100 °C, vorzugsweise 120 bis 150 °C, erhitzt, bis man eine regelmäßige Oberflächenbeschichtung mit der Paste jedes der Zusatzmetallteilchen erhält, und man die beschichteten Teilchen auf die Temperatur erhöht, bis das Wasser, das in dem Lötfilussmittel, das die Partikel beschichtet, verdampft ist, und
d) man das Lötprodukt erhält, indem man die beschichteten Teilchen des Schritts c) mit einem Druck von mindestens 5000 bar, vorzugsweise 7000 bar kompaktiert, indem man sie auf eine Temperatur von mindestens 300 °C niedriger als die Fusionstemperatur des Lötflussmittels erhitzt.

2. Verfahren nach Anspruch 1, **dadurch gekennzeichnet, dass** man bei dem Schritt a) die Zusatzmetallteilchen vorbereitet, indem man sie aus einem massiven Draht des Zusatzmetalls mit einem Durchmesser, der der Größe von 500 µm bis 5 mm entspricht, pro Einzellänge im Wesentlichen gleich dem Durchmesser des Drahtes, schneidet.

3. Verfahren nach einem der Ansprüche 1 und 2, **dadurch gekennzeichnet, dass** bei dem Schritt b) der Wassermasseanteil vorzugsweise 30 bis 50 %, vorzugsweise 40 % für 50 bis 70 % Lötflusspulver, vorzugsweise 60 % beträgt.

4. Verfahren nach einem der Ansprüche 1 bis 3, **dadurch gekennzeichnet, dass** man bei dem Schritt c) die Lötflusspaste in ein Mischgerät gießt, das aus einem drehenden Behälter (1) in Drehung besteht, der die Teilchen enthält, wobei der Behälter auf die Temperatur (1a) erhitzt ist.

5. Verfahren nach einem der Ansprüche 1 bis 4, **dadurch gekennzeichnet, dass** bei dem Schritt d) die Heiztemperatur zwischen 300 °C und 500 °C liegt.

6. Verfahren nach einem der Ansprüche 1 bis 5, **dadurch gekennzeichnet, dass** der Lötflussmasseanteil im Vergleich zu dem Gewicht der beschichteten Metallteilchen 3 bis 20 % beträgt.

7. Verfahren nach einem der Ansprüche 1 bis 6, **dadurch gekennzeichnet, dass** das Zusatzmetall eine Legierung ist, die als Basismetall ein Metall umfasst, das aus Silber, Aluminium, Zink und Kupfer ausgewählt ist, wobei das Sekundärmetall der Legierung aus Si, Zn, Cu, Mn, Fe, Zr, Sn, Ti, Be, Cd, Ag, Al und Sb ausgewählt ist.

8. Verfahren nach einem der Ansprüche 1 bis 7, **dadurch gekennzeichnet, dass** die Zusatzlegierung ein Gemisch aus 88 Gew.-% Aluminium und 12 Gew.-%Silizium ist, wobei das Lötflussmittel ein Kaliumcryolith ist, der 27 bis 30 % Kalium, 1,5 bis 2 % Cäsium, 16 bis 18 % Aluminium und 49 bis 53 % Fluor umfasst, und dass der Lötflussmittel-Masseanteil 8 bis 12 % beträgt.

9. Verfahren nach einem der Ansprüche 1 bis 7, **dadurch gekennzeichnet, dass** die Legierung 75 bis 98 % Zn und jeweils 2 bis 25 % Al umfasst, wobei das Lötflussmittel ein Cäsiumcryolith ist, der 50 bis 65 % Cäsium, 5 bis 15 % Aluminium und 25 bis 40 % Fluor umfasst und dass der Löiflussmittel-Masseanteil 5 bis 15 % beträgt.

10. Verfahren nach einem der Ansprüche 1 bis 9, **dadurch gekennzeichnet, dass** man bei dem Schritt d) ein Lötprodukt herstellt, das aus einem massiven Draht besteht, mit vorzugsweise 1 bis 3 mm Durchmesser, indem man die folgenden Schritte ausführt:
d-1) man platziert die beschichteten Teilchen des Schritts c) in einen zylindrischen Behälter (2) einer Strangpresse (4), den man auf eine Temperatur erhöht, die der Strangpresstemperatur entspricht, und man eine erste Kompression im Inneren des Behälters mit einem Druck von mindestens 5000 bar mit einem Kolben (3) der Strangpresse (4) ausführt, um einen kompakten Pressbolzen (5) mit einem Durchmesser von vorzugsweise mindestens 50 mm zu erhalten, und
d-2) man eine zweite Kompression mit Hilfe des Kolbens mit einem Druck ausführt, der geeignet ist, um das Strangpressen des Pressbolzens (5) durch eine Ziehdüse (9) mit einem Durchmesser zu erlauben, der kleiner ist als der des Pressbolzens, vorzugsweise 1 bis 3 mm Durchmesser, mit einem zweiten Druck von mindestens 10.000 bar, vorzugsweise auch mindestens 15.000 bar.

11. Verfahren nach Anspruch 10, **dadurch gekennzeichnet, dass** bei dem Schritt d-1) die beschichteten Teilchen des Schritts c) Zusatzmetallteilchen von 2 bis 5 mm, die mit dem Lötflussmittel beschichtet sind, umfassen.

12. Lötprodukt, das durch das Verfahren nach einem der Ansprüche 1 bis 9 erhalten wird, **dadurch gekennzeichnet, dass** es einen kompaktierten festen und starren Werkstoff umfasst, der ausschließlich aus dem Lötflussmittel und dem Zusatzmetall besteht, der Blockform aufweist, insbesondere in Form eines Pressbolzens (5), dessen Struktur, wie sie im Querschnitt oder Längsschnitt des Produkts beobachtet wird, aus den beschichteten Zusatzmetallteilchen (5a) des Flussmittels besteht, wobei die Zusatzmetallteilchen eine Größe von 500 µm bis 5 mm aufweisen, wobei die beschichteten Teilchen (5a) derart kompaktiert sind, dass das Lötflussmittel (6) die Räume zwischen den Metallteilchen (7) vollständig füllt, wobei der feste Werkstoff eine mechanische Festigkeit aufweist, die ihn zum Strangpressen mit einem Masseanteil des Lötflussmittels von 3 bis 20 %, vorzugsweise niedriger als 15 % geeignet macht.

13. Lötprodukt, das durch das Verfahren nach Anspruch 11 erhalten wird, **dadurch gekennzeichnet, dass** die Größe der Zusatzmetallteilchen 2 bis 5 mm beträgt.

14. Lötprodukt, das durch das Verfahren nach Anspruch 11 erhalten wird, **dadurch gekennzeichnet, dass** es Drahtform aufweist, vorzugsweise mit 1 bis 3 mm Durchmesser, und eine Struktur derart aufweist, dass man im Querschnitt des Drahtes ein Gemisch des Zusatzmetalls mit dem Lötflussmittel beobachtet, das ausschließlich aus dem Zusatzmetall mit dem Lötflussmittel besteht, mit Längsspuren von Lötflussmittel (6a) in die Masse des Zusatzmetalls (7b) eingelassen, mit einem Massenanteil des Lötflussmittels von 3 bis 20 %, vorzugsweise niedriger als 15 %.

## Claims

1. A method for manufacturing a brazing product from a brazing flux powder and a filler metal **characterized in that** the following steps are carried out wherein:
a) filler metal particles (7a), preferably of a filler alloy, with a size from 500 µm to 5 mm, preferably 2 to 4 mm are prepared, and
b) said brazing flux powder with a grain size of less than 100µm, preferably from 10 to 40µm, is mixed with water until a low viscosity paste is obtained, capable of flowing plastically, preferably a liquid paste (6a), and
c) said brazing flux paste is poured, preferably gradually and with a low flow rate, still preferably dropwise, on said metal particle while kneading and heating said metal particles to a temperature of at least 100°C, preferably from 120 to 150° C, until a regular coating of the surface of each of said filler metal particles with said paste is obtained according to the characteristics of claim 6, modified as follows, the flux mass proportion being from 5 to 15% relatively to the weight of said coated metal particles, and said coated particles are heated to said temperature until the water contained in said brazing flux coating said particles is evaporated, and
d) said brazing product is obtained by mechanically compacting the particles coated in step c) at a pressure of less than 5,000 bars, preferably at 7,000 bars, by heating them to a temperature lower by at least 300°C than the melting temperature of the brazing flux.

2. The method according to claim 1, **characterized in that** in step a), said filler metal particles are prepared by cutting them in a solid wire of said filler metal with a diameter corresponding to said size from 500 µm to 5 mm, per unit length preferably substantially equal to the diameter of the wire.

3. The method according to any of claims 1 and 2, **characterized in that** in step b) the water mass proportion is preferably from 30 to 50%, preferably 40% for 50 to 70% of flux powder, preferably 60%.

4. The method according to any of claims 1 to 3, **characterized in that** in step c), said flux paste is poured into a mixer consisting of a rotating rotary tank (1) containing said particles, said tank being heated (1a) to said temperature.

5. The method according to any of claims 1 to 4, **characterized in that** in step d) the heating temperature is comprised between 300°C and 500°C.

6. The method according to any of claims 1 to 5, **characterized in that** the flux mass proportion is from 3 to 20% relatively to the weight of said coated metal particles.

7. The method according to any of claims 1 to 6, **characterized in that** the filler metal is an alloy comprising as a base metal a metal selected from silver, aluminium, zinc and copper, the secondary metal of the alloy being selected from Si, Zn, Cu, Mn, Fe, Cr, Zr, Sn, Ti, Be, Cd,, Ag, Al, and Sb.

8. The method according to any of claims 1 to 7, **characterized in that** the filler alloy is a mixture of 88% by weight of aluminium and 12% by weight of silicon, the brazing flux is potassium cryolite comprising 27-30% of potassium, 1.5-2% of cesium, 16-18% of aluminium and 49-53% of fluorine and the mass proportion of brazing flux is from 8 to 12%.

9. The method according to any of claims 1 to 7, **characterized in that** the alloy comprises 75-98% of Zn and 2-25% of Al, respectively, the flux is cesium cryolite comprising 50-65% of cesium, 5-15% of aluminium and 25-40% of fluorine and the flux mass proportion is from 5 to 15%.

10. The method according to any of claims 1 to 9, **characterized in that** in step d), a brazing product is made, consisting of a solid wire preferably with a diameter from 1 to 3 mm, by carrying out the following steps:
d-1) the particles coated in step c) are placed in a cylindrical container (2) of an extruding press (4) which is brought to a so-called temperature corresponding to the extrusion temperature and a first compression is carried out inside said container at a pressure of at least 5,000 bars with a piston (3) of the extruding press (4) in order to obtain a compact billet (5) preferably with a diameter of at least 50mm, and
d-2) a second compression is carried out with said piston at a pressure capable of allowing extrusion of the billet (5) through a die (9) with a smaller diameter than that of the billet, preferably with a diameter from 1 to 3 mm, at a second pressure of at least 10,000 bars, still preferably at least 15,000 bars.

11. The method according to claim 10 wherein in step d1) the said particle coated in step c) comprises filler metal particles having a size of 2 to 5 mm coated with the said brazing flux.

12. A brazing product obtained by the method according to any of claims 1 to 9, **characterized in that** it comprises a compacted solid and rigid material, exclusively consisting of said brazing flux and of said filler metal, presenting the form of a block, in particular presenting a form of a billet (5), its structure as observed in a transverse or longitudinal section of said product consisting of said coated filler metal particles, of said flux, said filler metal particles having a size from 500µ to 5 mm, said coated particles (5a) being compacted so that said brazing flux (6) entirely fills the spaces between said metal particles (7), said solid material having mechanical strength making it extrudable under a press with a mass proportion of said brazing flux from 3 to 20%, preferably less than 15%.

13. The brazing product according to claim 11 wherein said filler metal particles have the size from 2 to 5 mm.

14. A brazing product obtained by the method according to claim 11, **characterized in that** it presents the form of a wire, preferably with a diameter from 1 to 3 mm, and has a structure such that in a longitudinal section of said wire, a mixture of said filler metal with said brazing flux is observed, exclusively consisting of said filler metal with said brazing flux, with longitudinal brazing flux traces (6a) embedded in the bulk of the filler metal (7b), with a mass proportion of said brazing flux from 3 to 20%, preferably less than 15%.
